# EUROPÄISCHE PATENTSCHRIFT

(11) **EP 0 544 236 B1**
(45) Veröffentlichungstag und Bekanntmachung des Hinweises auf die Patenterteilung: **07.02.1996**
(21) Anmeldenummer: 92119998.0
(22) Anmeldetag: 24.11.1992
(51) Int. Cl.: B60C 11/11, B60C 11/04

(54) **Laufflächenprofil für einen Fahrzeugreifen**
Tyre tread profile
Profil de bande de roulement pour pneumatique

(30) Priorität: 25.11.1991 DE 4138687
(43) Veröffentlichungstag der Anmeldung: 02.06.1993
(73) Patentinhaber: PIRELLI REIFENWERKE GmbH, D-64739 Höchst (DE)
(72) Erfinder: Overhoff, Dietrich, Dr., W-6114 Gross-Umstadt (DE); Sallein, Otto, W-6127 Breuberg/Odenwald (DE)
(74) Vertreter: Seibert, Hannelore

(56) Entgegenhaltungen:
- EP-A- 0 431 853
- FR-A- 2 283 018
- FR-A- 2 640 913

## Beschreibung

Die Erfindung bezieht sich auf ein Laufflächenprofil für einen Fahrzeugreifen.

Bei Laufflächenprofilen für Fahrzeugreifen werden von den meist mehr oder weniger schräg zur Umfangsrichtung verlaufenden Profilrillen Antriebs-, Kurven- und Bremskräfte übertragen. Zusätzlich können gegebenenfalls noch Längsrillen vorgesehen sein, die für die Seitenstabilität des Reifens maßgebend sind und ein Aquaplaning verhindern sollen.

Wesentlich für die Übertragung der Antriebs- und Bremskräfte sind bei einem Fahrzeugreifen vor allem quer verlaufende Profilkanten, die mit dem Boden in Berührung kommen. Einer zu starken Unterteilung eines Laufflächenprofils durch Querrillen sind jedoch konstruktive Grenzen gesetzt.

Aus der FR-A-2 640 913 ist ein Laufflächenprofil bekannt, das in Umfangsrichtung verlaufende Längsrillen und von den Längsrillen ausgehende Querrillen aufweist. Durch die Längs- und Querrillen sind Profilblöcke begrenzt. An den Seitenflächen der Profilblöcke, die den Längsrillen zugewandt sind, sind in Umfangsrichtung verlaufende sägezahnförmige Ansätze vorgesehen, die sich mit gleicher Breite von der Profiloberfläche bis zum Rillengrund erstrecken.

Der Erfindung liegt die Aufgabe zugrunde, bei einer nicht zu starken Unterteilung eines Laufflächenprofils durch Querrillen die Übertragung der Antriebs- und Bremskräfte zu erhöhen.

Diese Aufgabe wird erfindungsgemäß gelöst durch ein Laufflächenprofil für einen Fahrzeugreifen mit schräg zur Umfangsrichtung verlaufenden Querrillen sowie mindestens einer Umfangsrille, zwischen denen Profilblöcke abgegrenzt sind, wobei die Seitenflächen der Profilblöcke mindestens zwei, etwa im mittleren Bereich angeordnete, sich zum Rillengrund verbreiternde, sägezahnförmige Ansätze aufweisen, wobei bei unterschiedlicher Länge der Profilblöcke an jedem der Profilblöcke eine unterschiedliche Anzahl von Ansätzen vorgesehen ist. Hierdurch werden zusätzliche Querkanten und Querflächen geschaffen, so daß zusätzliche Kräfte übertragen werden können. Als Resultat ergibt sich eine erhebliche Verbesserung der Traktion des Reifens, insbesondere im Winterbetrieb bei Tiefschnee, sowie eine erheblich verbesserte Bremsverzögerung.

Bei einem Fahrzeugreifen mit mindestens einer Längsrille ist es dabei zweckmäßig, die Ansätze auch an der die Längsrille begrenzenden Seitenflächen der Profilblöcke vorzusehen.

Diese Ansätze können - in ihrer Längserstreckung gesehen - von der Oberkante der Profilblöcke bis zum Rillengrund sägezahnförmig gestuft verlaufen.

Es ist aber auch möglich, daß die Ansätze mit der Oberkante der Profilblöcke bündig abschließen.

Anhand einer schematischen Zeichnung sind Aufbau und Funktionsweise eines Ausführungsbeispiels nach der Erfindung näher erläutert. Dabei zeigen:
- Fig. 1: eine Aufsicht auf einen Ausschnitt eines Laufflächenprofils,
- Fig. 2: einen Querschnitt durch dieses Profil entsprechend der Schnittlinie II-II nach Fig. 1,
- Fig. 3: eine perspektivische Ansicht des Profils mit Blick auf eine Seitenfläche eines Profilblockes mit sägezahnförmigen Ansätzen und
- Fig. 4: eine perspektivische Ansicht des Profils mit an der Oberkante eines Profilblocks bündig abschließenden Ansätzen.

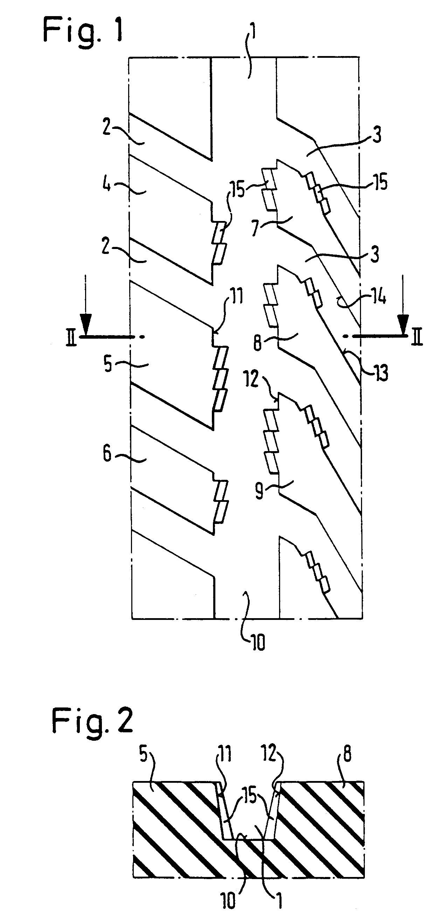

Fig. 1 zeigt eine Aufsicht auf einen Profilteil mit einer umlaufenden Längsrille 1, von dem beiderseits Querrillen 2 und 3 ausgehen, wobei die Querrillen 2 schwächer zur Längsrille 1 geneigt sind als die Querrille 3, die zusätzlich in ihrem Verlauf noch stärker abgewinkelt und einen kleineren Winkel zur Längsrille 1 einschließt. Zwischen diesen Querrillen 2 und 3 sowie gegebenenfalls der Längsrille 1, - die jedoch bei einem solchen Profil nicht unbedingt erforderlich ist - sind auf der einen Seite Profilblöcke 4, 5 und 6 und auf der anderen Seite der Längsrille 1 Profilblöcke 7, 8 und 9 jeweils unterschiedlicher Länge bzw. Breite angeordnet. Diese Profilblöcke weisen üblicherweise - wie man aus dem Querschnitt nach Fig. 2 ersieht - zum Nutgrund 10 hin schwach V-förmig geneigte Seitenflächen 11 und 12 beiderseits der Längsrille 1 sowie 13 und 14 beiderseits einer Querrille 3 auf.

Erfindungsgemäß sind nunmehr an diesen Seitenflächen 11 und 12 bzw. 13 und 14 der Profilblöcke sich zum Rillengrund hin V-förmig erweiternde Ansätze 15 vorgesehen, die in Längsrichtung der Profilblock-Seitenflächen 11 und 12 bzw. 13 und 14 sägezahnförmig gestuft verlaufen.

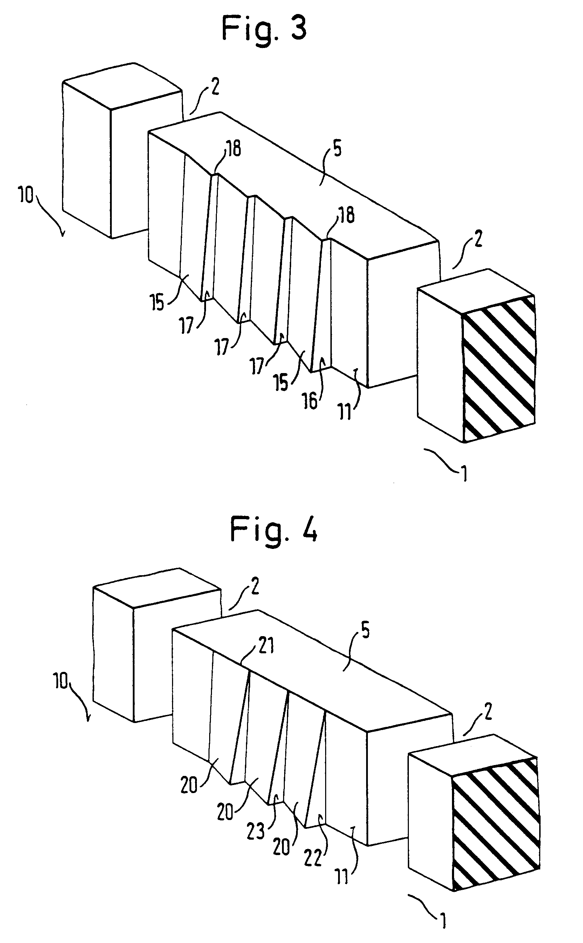

Besonders deutlich kann man die Anordnung dieser gestuften Ansätze 15 aus der perspektivischen Ansicht nach Fig. 3 erkennen, bei dem ein Profilblock 5 mit seiner Seitenfläche 11 entlang einer Längsrille 1 dargestellt ist. Durch diese Ansätze 15, die sägezahnförmig gestaffelt sind, ergeben sich zum Rillengrund 10 hin verbreiternde Querflächen 16 und 17, die sich zur Oberkante des Profilblockes 5 hin zwar verjüngen, aber auch hier noch eine schmalere Querkante 18 bilden. Durch solche Querflächen 16 und 17 sowie entsprechende Querkanten 18 können zusätzliche Kräfte aufgenommen und übertragen werden.

Auf der gegenüberliegenden Seite sind an den in der perspektivischen Darstellung nicht gezeigten Profilblöcken 7, 8 und 9 gleichartige Ansätze 15 vorgesehen, sowie in den Querrillen 3 und gegebenenfalls auch in den Querrillen 2 jeweils auf einer Seite oder auch auf beiden Seiten dieser Querrillen.

Fig. 4 zeigt eine weitere perspektivische Ansicht auf einen Profilblock 5, bei dem entsprechende Ansätze 20 jedoch so gestaltet sind, daß sie mit der Oberkante 21 des Profilblockes bündig abschließen. Damit ergeben sich ebenfalls sich nach unten hin verbreiternde Querflächen 22 und 23, die dreieckförmig ausgebildet sind und nach oben hin spitz zulaufen. Diese Art von Querflächen haben besonderen Vorteil bei Sand oder Lockerschnee, der in solche Profilrillen eindringt.

Die Ansätze 15 bzw. 20 sind dabei jeweils im mittleren Bereich der Seitenfläche 11 eines solchen Profilblockes 4, 5 und 6 bwz. 7, 8 und 9 vorgesehen, wobei mindestens zwei Ansätze je Profilblock angeordnet werden sollten. Bei unterschiedlicher Länge der Profilblöcke ist aber auch eine unterschiedliche Anzahl von Ansätzen an jedem der Profilblöcke möglich, wobei die einzelnen Ansätze auch mit Zwischenraum zueinander ausgeführt sein können.

Die gezeigte Darstellung geht aus von einem Laufflächenprofil mit mindestens einer Längsrille. Das Grundprinzip ist jedoch auch anwendbar, wenn mehrere Längsrillen vorgesehen sind und auch wenn das Profil im wesentlichen allein aus Querrillen besteht, wobei dann diese Ansätze jedoch zweckmäßigerweise nur in schräg zur Umlaufrichtung verlaufende Querrillen vorgesehen werden, um damit noch eine Komponente für die zu bildenden Querkanten bzw. Querflächen in Laufrichtung des Reifens zu erhalten.

Somit können also mit einfachen Mitteln zusätzliche Querflächen und -kanten an den Profilblöcken geschaffen werden, um damit auftretende Kräfte besser übertragen zu können.

## Patentansprüche

1. Laufflächenprofil für einen Fahrzeugreifen mit schräg zur Umfangsrichtung verlaufenden Querrillen (2, 3) sowie mindestens einer Umfangsrille (1), zwischen denen Profilblöcke (4, 5, 6, 7, 8, 9) abgegrenzt sind, deren Seitenflächen (11, 12, 13, 14) mindestens zwei, etwa im mittleren Bereich angeordnete, sich zum Rillengrund (10) verbreiternde, sägezahnförmige Ansätze (15, 20) aufweisen, wobei bei unterschiedlicher Länge der Profilblöcke (4, 5, 6, 7, 8, 9) eine unterschiedliche Anzahl von Ansätzen (15, 20) an jedem der Profilblöcke (4, 5, 6, 7, 8, 9) vorgesehen ist.

2. Laufflächenprofil nach Anspruch 1, dadurch gekennzeichnet, daß bei Fahrzeugreifen mit mindestens einer Längsrille (1) die Ansätze (15; 20) an der die Längsrille (1) begrenzenden Seitenflächen (11, 12) der Profilblöcke vorgesehen sind.

3. Laufflächenprofil nach Anspruch 1 oder 2, dadurch gekennzeichnet, daß die Ansätze (15) - in ihrer Längserstreckung gesehen - von der Oberkante der Profilblöcke (4, 5, 6; 7, 8, 9) bis zum Rillengrund (11) sägezahnförmig gestuft verlaufen.

4. Laufflächenprofil nach Anspruch 1, 2 oder 3, dadurch gekennzeichnet, daß die Ansätze (20) mit der Oberkante (21) der Profilblöcke (4, 5, 6; 7, 8 ,9) bündig abschließen.

## Claims

1. Tyre tread profile for a vehicle tyre with cross-grooves (2, 3) running obliquely to the direction of the circumference and at least one circumferential groove (1), delimited between which are tread blocks (4, 5, 6, 7, 8, 9), the lateral faces (11, 12, 13, 14) of which have at least two saw-tooth-shaped projections (15, 20) disposed roughly in the middle area and widening towards the bottom of the groove (10), a different number of projections (15, 20) being provided on each of the tread blocks (4, 5, 6, 7, 8, 9) in the case of a differing length of the tread blocks (4, 5, 6, 7, 8, 9).

2. Tyre tread profile according to claim 1, characterized in that in the case of vehicle tyres with at least one longitudinal groove (1), the projections (15; 20) are provided on the lateral sides (11, 12) of the tread blocks delimiting the longitudinal groove (1).

3. Tyre tread profile according to claim 1 or 2, characterized in that the projections (15) - viewed in their longitudinal extension - progress from the top edge of the tread blocks (4, 5, 6; 7, 8, 9) stepped saw-tooth-shapedly as far as the bottom of the groove (11).

4. Tyre tread profile according to claim 1, 2 or 3, characterized in that the projections (20) end flush with the top edge (21) of the tread blocks (4, 5, 6; 7, 8, 9).

## Revendications

1. Profil de bande de roulement pour un pneumatique présentant des rainures transversales (2, 3) s'étendant en oblique par rapport à la direction circonférentielle ainsi qu'au moins une rainure circonférentielle (1), entre lesquelles sont délimités des blocs profilés (4, 5, 6, 7, 8, 9) dont les faces latérales (11, 12, 13, 14) présentent au moins deux saillies (15, 20) en forme de dents de scie, agencées approximativement dans la région médiane et s'élargissant vers le fond (10) des rainures, un nombre différent de saillies (15, 20) étant prévu sur chacun des blocs profilés (4, 5, 6 ; 7, 8, 9) lorsque les blocs profilés (4, 5, 6 ; 7, 8, 9) sont de longueurs différentes.

2. Profil de bande de roulement selon la revendication 1, caractérisé en ce que dans le cas de pneumatiques présentant au moins une rainure longitudinale (1), les saillies (15, 20) sont prévues sur les faces latérales (11, 12) des blocs profilés qui délimitent la rainure longitudinale (1).

3. Profil de bande de roulement selon l'une ou l'autre des revendications 1 et 2, caractérisé en ce que les saillies (15) - vues dans leur extension longitudinale - s'étendent en gradins en forme de dents de scie depuis l'arête supérieure des blocs profilés (4, 5, 6 ; 7, 8, 9) jusqu'au fond (10) de la rainure.

4. Profil de bande de roulement selon l'une ou l'autre des revendications 1, 2 et 3, caractérisé en ce que les saillies (20) affleurent avec l'arête supérieure (21) des blocs profilés (4, 5, 6 ; 7, 8, 9).
